# EUROPEAN PATENT APPLICATION

(11) **EP 1 702 667 A2**
(43) Date of publication of application: **20.09.2006**
(21) Application number: 06101586.3
(22) Date of filing: 13.02.2006
(51) Int. Cl.: B01D 53/26, F25B 49/02

(54) **Control system for refrigeration-based compressed-gas dryers**

(30) Priority: 14.03.2005 IT PN20050017
(71) Applicant: Domnick Hunter Hiross S.p.A., 35020 Sant'Angelo Di Piove (Padova) (IT)
(72) Inventor: Bellemo, Luciano, 30015, Chioggia (Venezia) (IT)
(74) Representative: Giugni, Valter

(57) **Abstract**

Improved control system for refrigeration-based compressed-gas dryers comprising a refrigerating circuit with a compressor (10), a condenser (12), a throttling member (14) and an evaporator (16), and further comprising a heat exchanger (22), a condensate separator (18) and a condensate drain (20), in which the compressor (10) is by-passed by a hot-gas valve (30). Control means (38, 40) are provided for measuring the temperature of the thermal mass of the dryer, or a temperature correlating therewith, and actuating the compressor (10) into switching on and off, as well as operating an electromagnetic valve (36) associated upstream of the hot-gas valve (30), accordingly, so as to selectively cause the dryer to operate as a hot-gas dryer or a thermal-mass dryer for variable period of times depending on the thermal load.

## Description

The present invention refers to an improved control system for refrigeration-based compressed-gas dryers, i.e. machines that are usually employed for removing moisture contained in a stream of compressed gas, in particular compressed air.

A control system for refrigeration-based compressed-gas dryers of the above-cited kind is described in the publication EP 1 293 243 of the same Applicant, where a description is given concisely of the various kinds of dryers that are currently used or can be currently found on the market.

As generally known in the art, a typical refrigeration-based compressed-air dryer usually works to reduce the water-vapour content in the stream of compressed air by causing the same vapour do condense - as a result of the air entering the dryer being cooled down - and eventually letting off the condensed vapour. In other words, the compressed air is first cooled down in an air-to-air heat exchanger (also referred to as economizer in the art) by the stream of cold compressed air flowing in from the evaporator of the refrigerating circuit. The cold compressed air leaving the air-to-air heat exchanger flows into the evaporator of the refrigerating circuit, where it cools further down due to the evaporation of a refrigerant or coolant medium. At the evaporator outlet, the compressed air reaches its lowest temperature (dew point under pressure), to which there corresponds a relative humidity of 100%. Before this air flow is conveyed back into the air-to-air heat exchanger, the condensed water vapour is separated therefrom and let out. At the outlet of the air-to-air heat exchanger, the water vapour content remains unaltered (same dew point under pressure), but the relative humidity thereof decreases due to the heat-up effect.

In other kinds of dryers, i.e. the so-called "thermal mass" dryers, use is made of an intermediate medium to cool down the compressed air, wherein this intermediate medium is in turn cooled down in another heat exchanger by the evaporating refrigerant medium.

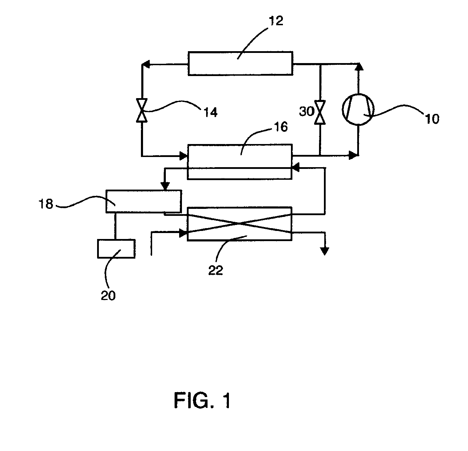

In the so-called "hot gas" dryers, the refrigeration compressor operates constantly, even if there is no flow of compressed air, and the refrigerating output or effect that is produced in excess by the refrigerating circuit is compensated for by the hot gas being pumped by the compressor, which is by-passed directly on the suction side by a control member designed to prevent the temperature of the air from decreasing to any value below zero (Figure 1). This control member is typically a pressure-operated valve controlling the suction pressure of the compressor. In these hot-gas dryers, the dew point is practically constant.

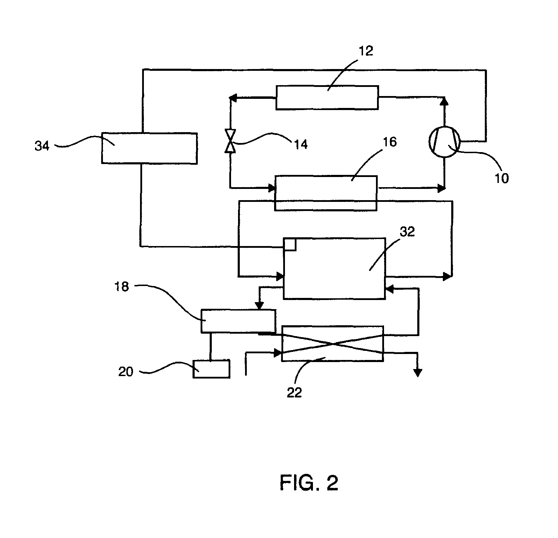

In "thermal-mass" dryers, the oscillations, i.e. periodical variations of the dew point are not negligible and the electric power input is variable, since it is roughly proportional to the thermal load (a combination of flow rate, temperature, pressure and relative humidity of the gas). The refrigeration compressor is controlled by a thermostat that controls the temperature of the thermal mass (typically a temperature that is correlated to the minimum temperature of the air in the evaporator). Such thermostat switches the compressor cyclically on and off in order to keep the temperature of the thermal mass within pre-established limits (Figure 2). When the compressor is working, the refrigerating power that is produced in excess is stored in the thermal mass and is used to cool down the compressed air when the compressor is switched off. Dryers of this kind, however, have necessarily larger sizes and involve higher costs than the other dryers known in the art, and their power input under nominal conditions, i.e. their power input rating is higher than that of corresponding hot-gas dryers, owing to the twofold heat-exchange process that forces the compressor to work at lower suction pressures and, as a result, with a lower energy efficiency (COP).

Unlike thermal-mass dryers, a hot-gas dryer uses heat exchangers (i.e. the air-to-air heat exchanger and the evaporator of the refrigerating circuit) that do not have any sufficient thermal mass to keep the periodical variations of the dew point within an adequately narrow range (e.g., 3°C) and to ensure a number of on/off cycles of the compressor that is lower than the highest allowable one prescribed by compressor manufacturers (e.g., 12 cycles/hour).

Therefore, it is a first purpose of the present invention to provide a novel control system for a refrigeration-based compressed-gas dryer that, although making use of heat exchangers that are typical of hot-gas dryers, is effective in enabling an energy saving effect to be obtained under varying conditions of the thermal load, which is rather similar to the one achievable in thermal-ass dryers.

Another purpose of the present invention is to ensure a lowest possible dew point of the compressed gas, which is further subject to variations of a satisfactorily limited extent.

Yet another purpose of the present invention is to provide a compressed-gas dryer whose costs are comparably low as the ones of hot-gas dryers, and is further compact in size and low in weight as a hot-gas dryer.

According to the present invention, these and further aims are reached in a refrigeration-based compressed-gas dryer provided with a control system incorporating the characteristics and features as recited in the appended claims 1 et seq.

Anyway, features and advantages of the present invention will be more readily understood from the detailed description that is given below by way of non-limiting example with reference to the accompanying drawings, in which:
- Figure 1 is a schematical view of a compressed-gas dryer of the hot-gas kind with compressor pressure control, according to the prior art;
- Figure 2 is a schematical view of a compressed-gas dryer of the thermal-mass kind with temperature control, according to the prior art;
- Figure 3 is a schematical view of a refrigeration-based compressed-gas dryer incorporating a control system according to the present invention;
- Figure 4 is a diagram plotting the electric power input versus the thermal load in a compressed-gas dryer according to the present invention as compared with a hot-gas dryer and a thermal-mass dryer according to the prior-art;
- Figure 5 is a diagram plotting compressor operation versus the controlled temperature, according to the control system of the present invention.

As already noted hereinbefore, and illustrated in Figures 1 to 3, a refrigeration-based compressed-gas dryer comprises a refrigerating circuit including a compressor 10, which pumps the refrigerant medium into a condenser 12, where the same medium is converted from the gaseous phase into the liquid one for flowing then in this state through a throttling member 14 and, finally, into and through an evaporator 16, before being drawn in again by the compressor.

Condensate forming as the gas, i.e. the air is cooled down is removed therefrom in a condensate separator 18, properly collected and finally let out by a condensate drain device 20.

In addition, both prior-art dryers and the dryer according to the present invention comprise a heat exchanger 22, or economizer, in which the compressed gas or air is pre-cooled by the same compressed gas or air undergoing post-heating.

The hot-gas compressed-gas dryer (Figure 1) also comprises a further throttling member 30, which is usually constituted by a pressure-controlled valve that controls the suction pressure of the compressor by by-passing the latter, so as to prevent the air temperature from subcooling, i.e. decreasing to a value below zero.

As opposed thereto, the thermal-mass compressed-gas dryer (Figure 2) makes use of an intermediate compressed-air/liquid heat exchanger 32, as arranged between the heat exchanger 22 and the evaporator 16, and a thermostat 34 that typically controls a temperature of the liquid or a temperature at a point of the heat exchanger 32 that correlates to the outlet temperature of the compressed air from the heat exchanger 32 so as to cycle the compressor 10 on and off in view of keeping the temperature of the thermal mass within pre-set limits.

According to the present invention, the novel control system for a refrigeration-based compressed-gas dryer is based on the principle of letting the dryer operate selectively as a hot-gas dryer or a thermal-mass dryer, so as to optimize the performance and the efficiency thereof through the measurement and corresponding detection of the thermal load.

The novel control system is first of all aimed at solving the basic problem of reconciling two mutually clashing technical requirements, i.e.
(i) keeping the highest allowable number of on/off cycles per hour of the compressor within the limits prescribed by the dryer manufacturer (e.g., 12 cycles per hour), and (ii) keeping the oscillation or variation extent of the dew point within limits that are acceptable by the user (e.g., between 1°C and 5°C).

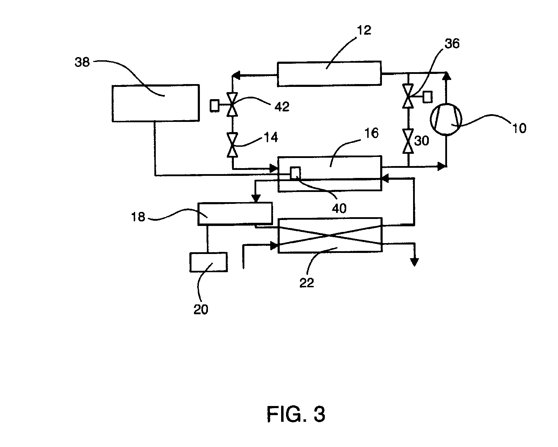

The solution of this problem is based on the consideration that a hot-gas dryer, such as the one described with reference to Figure 1, has a limited thermal mass, which can however prove sufficient to ensure adequate compliance with the afore-indicated requirements when the thermal load is low (e.g., anywhere between 0 and 5%). In view of reaching the aims of the present invention, a solution has therefore been devised, in which an electromagnetic valve 36 is associated upstream of the hot-gas bypass device 30 (Figure 3). This electromagnetic valve 36 has the purpose of allowing the pressure-controlled bypass valve 30 to work whenever this is necessary, as this shall be explained in greater detail further on. In this connection, it should be noticed that the electromagnetic valve 36 is capable of performing its particular task even in the case that it is installed downstream of the valve 30. In a still simpler manner the thermostatic control function may be implemented in an electronic control unit 38 of the dryer, duly connected with a sensor 40 associated to the evaporator 16 of the refrigerating circuit.

The electronic control unit 38 measures the temperature of the thermal mass of the dryer, e.g. at a point of the evaporator 16 that lies close to the outlet of the compressed air from the evaporator and/or near the inlet point of the refrigerant medium (with the air and the refrigerant medium flowing in opposite, i.e. countercurrent directions), so that this temperature correlates to the dew point of the compressed air. In this case, the sensor 40 is a temperature sensor.

Alternatively, there can be measured the outlet temperature of the compressed air from the evaporator 16, or the temperature of the refrigerant medium flowing into the evaporator (with the air and the refrigerant medium flowing in opposite, i.e. countercurrent directions). As a further alternative solution, the quantity to be measured may be the evaporating pressure of the refrigerant medium, since all these quantities are correlated to the dew point. Anyway, in the last-mentioned case, the sensor 40 is a pressure sensor.

On the basis of the measured quantity, the electronic control unit actuates the compressor 10 and the electromagnetic valve 36 located upstream of the hot-gas bypass valve 30 in the manner described below.

When the thermal load is low (e.g., anywhere between 0 and 5%), the system operates as a thermal-mass dryer. In particular, when operating with very low loads (i.e. near-zero loads, with practically no compressed air flowing therethrough), the dryer saves a considerable amount of energy, since its heat losses (brought about by or due to the outer surface of the heat exchangers) are lower than those of a real thermal-mass dryer (with three heat exchangers, instead of only two, and a greater volume due to the means forming the thermal mass).

When the thermal load is on the contrary high (e.g., higher than 20%), the system operates "concurrently" as a hot-gas dryer and a thermal-mass one, in that it goes alternately through periods in which it works as a hot-gas dryer and periods in which it on the contrary works as a thermal-mass dryer. As the thermal load increases, the periods in which the inventive system works as a hot-gas dryer grow longer, while the periods in which it works as a thermal-mass dryer become shorter. The electrical power input increases as the thermal load rises - albeit in a non-linear manner - until it eventually reaches its rated value at a thermal load of 100%. This rated value is anyway lower than the power input at 100% of the thermal load in a traditional thermal-mass dryer.

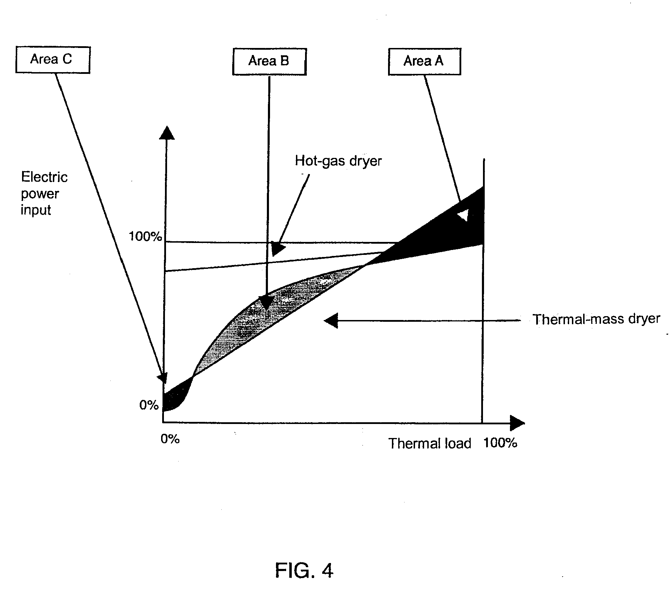

This result, which is attainable with the novel control system according to the present invention, is clearly inferable from the diagram in Figure 4, where the electric power input of the dryer is plotted against the thermal load. It can be readily noticed that, as compared with a thermal-mass dryer, a refrigeration-based compressed-gas dryer provided with the novel control system of the invention involves a power input that, while being higher at "medium" thermal loads (area B in the diagram), is certainly lower at "high" and "low" thermal loads (areas A and C in the diagram, respectively), wherein such power input is anyway much lower than that of a hot-gas dryer at low and medium thermal loads.

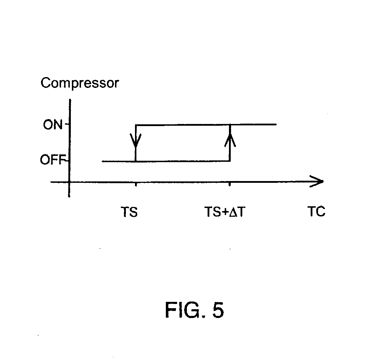

When the dryer provided with the inventive control system works in the way of a thermal-mass one, the compressor 10 is normally controlled by a single-step thermostatic control function, as shown in Figure 5, where:
- TC is the controlled temperature (e.g., the temperature of the thermal mass);
- TS is the set point;
- ΔT is the differential.

For the insufficiency of the thermal mass of the evaporator 16 to be compensated for, use is made of the hot-gas bypass contrivance 30 by acting on the electromagnetic valve 36 so as to enable the compressor to operate for a length of time corresponding to the minimum running time (to which there corresponds the highest allowable number of on/off cycles specified by the compressor manufacturer), while preventing ice from forming in the evaporator to any dangerous or, anyway, unacceptable extent. An example of the above-described logics may be the following one.

Let it be assumed that the upper limit of hourly on/off cycles of the compressor is in the number of 12, so that an average time of 5 minutes has to elapse between two energizations or two de-energizations of the compressor. Let it also be assumed that the thermal load is approximately 50% of the rated one (i.e. a condition requiring the highest number of on/off cycles of the compressor in a thermal-mass dryer). Under these conditions, upon the compressor having been switched off, i.e. deenergized, the controlled temperature TC quickly reaches up to the value TS+ΔT owing to the small thermal mass being available. In order to prevent the dew point from rising beyond the limit of acceptability, the compressor 10 shall therefore be switched on after just quite short a time having actually elapsed from the moment in which the same compressor had previously been switched off (such time being certainly much shorter than 5 minutes). Once the compressor has been switched on, the temperature of the thermal mass TC decreases in an equally quick manner to reach TS before 5 minutes have actually elapsed from the last de-energization of the compressor. The control unit 38 must at this point actuate the electromagnetic valve 36 upstream of the hot-gas valve 30 to open for the remaining period of time, so as to enable the dryer to operate in the way of a normal hot-gas dryer until the required 5 minutes from the last de-energization of the compressor are eventually reached. It is just after this time is reached that the compressor is switched off. In this way, an adequate dew point is ensured along with due compliance with the upper limit required for the number of hourly on/off cycles of the compressor, although less energy is saved, actually.

It will usually happen that, at low thermal loads, the electronic control unit 38 keeps the electromagnetic valve 36 associated to the hot-gas valve 30 closed, thereby causing the dryer to work in a thermal-mass mode, whereas it will cause the same dryer to work in a mixed mode at higher thermal loads.

For the performance capabilities of the dryer to be further improved, and in order to attain a low dew point with just small oscillations or variations thereof, use is made of a control method based on the measurement of the thermal load.

For the thermal load to be measured, all it takes is to measure the rate at which the temperature of the thermal mass rises after the compressor 10 is switched off. As an alternative option, there can be measured the rate at which such temperature decreases after the compressor is switched on.

Each single dryer, as duly provided with a given compressor 10, air-to-air heat exchanger 22 and evaporator 16, will have rate values that vary depending on the thermal load and are characteristic of each particular dryer, wherein such values can be readily and easily determined experimentally.

The rate can for instance be calculated as:
- the ratio of a pre-set ΔT (temperature difference) to the time t elapsing from the moment at which the compressor is switched off to the moment at which the temperature of the thermal mass reaches a value equal to its value at compressor de-energization plus the pre-set ΔT;
- the inverse ratio of a pre-set Δt (time difference) and the difference between the temperature measured at the initial instant and the temperature measured at the final instant of that period of time.

It can be readily appreciated that the greater this ratio, the higher is the thermal load, and vice-versa.

When these values are known, the compressor 10 and the electromagnetic valve 36 can then be controlled so as to attain the pre-set aims as far as energy saving effect and dew-point control are concerned.

The performance capabilities of the dryer provided with the inventive control system can be still further improved by providing another electromagnetic valve 42 (Figure 3) upstream of the throttling member 14, so as it closes when the compressor 10 is switched off (to re-open when the same compressor is switched on again), thereby preventing the refrigerant medium from flowing from the high-pressure side of the refrigerating circuit to the low-pressure one, especially in the case that the throttling member 14 is a capillary tube. In fact, such flow of refrigerant medium might affect the temperature measurements used to thermostatic control and thermal-load calculation purposes.

## Claims

1. Improved control system for refrigeration-based compressed-gas dryers comprising a refrigerating circuit with a compressor (10), a condenser (12), a throttling member (14) and an evaporator (16), and further comprising a heat exchanger (22), a condensate separator (18) and a condensate drain (20), in which the compressor (10) is by-passed by a hot-gas valve (30), **characterized in that** there are provided control means (38, 40) for measuring the temperature of the thermal mass of the dryer, or a temperature correlating therewith, and actuating the compressor (10) into switching on and off, as well as operating an electromagnetic valve (36) associated upstream of the hot-gas valve (30), accordingly.

2. Improved control system for refrigeration-based compressed-gas dryers according to claim 1, **characterized in that** the control means (38, 40) are adapted to selectively cause the dryer to operate as a hot-gas dryer or a thermal-mass dryer for variable period of times depending on the thermal load.

3. Improved control system for refrigeration-based compressed-gas dryers according to claim 1, **characterized in that** the control means (38, 40) are adapted to cause the dryer to operate as a thermal-mass dryer when the thermal load is low, and are alternatively adapted to cause the dryer to operate as a hot-gas dryer and a thermal-mass dryer when the thermal load is a high one.

4. Improved control system for refrigeration-based compressed-gas dryers according to claim 1, **characterized in that** the control means comprise an electronic control unit (38) connected to a sensor (40) that is associated to the evaporator (16) of the refrigerating circuit.

5. Improved control system for refrigeration-based compressed-gas dryers according to claim 4, **characterized in that** the sensor (40) is a temperature sensor and is adapted to measure a temperature that is correlated to the dew point of the compressed air.

6. Improved control system for refrigeration-based compressed-gas dryers according to claim 4, **characterized in that** the sensor (40) is a temperature sensor and is adapted to measure the outlet temperature of the compressed air from the evaporator (16).

7. Improved control system for refrigeration-based compressed-gas dryers according to claim 4, **characterized in that** the sensor (40) is a temperature sensor and is adapted to measure the inlet temperature of the refrigerant medium entering the evaporator (16).

8. Improved control system for refrigeration-based compressed-gas dryers according to claim 4, **characterized in that** the sensor (40) is a pressure sensor and is adapted to measure the evaporating pressure of the refrigerant medium in the evaporator (16).

9. Improved control system for refrigeration-based compressed-gas dryers according to claim 1, **characterized in that** upstream of the throttling member (14) there is provided a further electromagnetic valve (42) controlled by the electronic control unit (38) and adapted to be closed when the compressor (10) is switched off and to be re-opened when the compressor is started again.

10. Improved control system for refrigeration-based compressed-gas dryers as described and illustrated with reference to the accompanying drawings, and intended for use in the afore-cited ways.
